# EUROPEAN PATENT APPLICATION

(11) **EP 2 573 406 A1**
(43) Date of publication of application: **27.03.2013**
(21) Application number: 10851800.2
(22) Date of filing: 17.05.2010
(51) Int. Cl.: F15B 13/042, F16K 1/42, F16K 17/196, E02F 9/22

(54) **PRESSURE CONTROL VALVE**

(71) Applicant: Volvo Construction Equipment AB, 631 85 Eskilstuna (SE)
(72) Inventor: KIM, Jin-Wook, Changwon-si, Gyeongsangnam-do 641-100 (KR)
(74) Representative: Epping - Hermann - Fischer
(86) International application number: PCT/KR2010/003093
(87) International publication number: WO 2011/145753

(57) **Abstract**

A pressure control valve is provided, which protects a hydraulic system by feeding a high-pressure flow rate back to the side of a hydraulic tank when hydraulic pressure on a hydraulic pump side is increased over a predetermined pressure. The pressure control valve includes a sleeve having an inlet port receiving hydraulic fluid and a low-pressure path communicating with a hydraulic tank, a main poppet opening and closing the low-pressure path with respect to the inlet port, a main poppet spring elastically biasing the main poppet in an initial state by pressing the main poppet to maintain the low-pressure path closed with respect to the inlet port, a pilot poppet having an orifice flow path to control pressure in the pressure chamber while maintaining a sliding state against a valve seat when pressure that exceeds a predetermined pressure is generated in the pressure chamber to open an internal flow path of the valve seat, and a pilot poppet spring elastically biasing the pilot poppet in an initial state by pressing the pilot poppet to maintain the internal flow path of the valve seat closed.

## Description

### TECHNICAL FIELD

The present invention relates to a pressure control valve for a construction machine. More particularly, the present invention relates to a pilot poppet type pressure control valve, which can protect a hydraulic system by being shifted to feed a high-pressure flow rate on a hydraulic pump side back to a hydraulic tank side when hydraulic pressure on the hydraulic pump side is increased in excess of a predetermined pressure.

### BACKGROUND ART

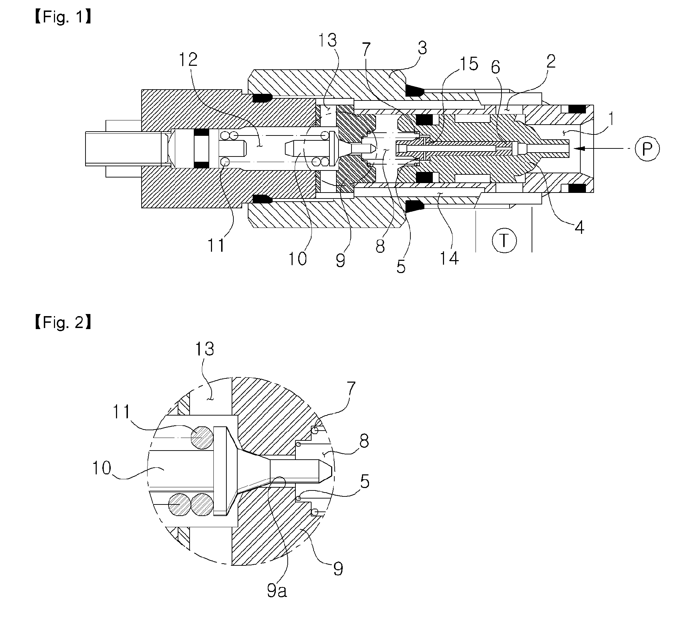

A pressure control valve in the related art, as shown in Fig. 1, includes a sleeve 3 having an inlet port 1 receiving an inflow of high-pressure hydraulic fluid from a hydraulic pump P and a low-pressure path 2 communicating with a hydraulic tank T, a main poppet 4 detachably mounted (seated/unseated) on the sleeve 3 to open and close the low-pressure path 2 with respect to the inlet port 11, a piston 6 slidably coupled to the main poppet 4 to be elastically supported by a piston spring 5, a main poppet spring 7 elastically biasing the main poppet 4 in an initial state by pressing the main poppet 4 to maintain the low-pressure path 2 closed with respect to the inlet port 1, a valve seat 9 installed in the sleeve 3 to face the main poppet 4 so as to form a pressure chamber 8, a pilot poppet 10 seated on or unseated from the valve sheet 9 to open an internal flow path 9a of the valve seat 9 when pressure that exceeds a predetermined pressure is generated in the pressure chamber 8, and a pilot poppet 11 elastically biasing the pilot poppet 10 in an initial state by pressing the pilot poppet 10 to maintain the internal flow path 9a of the valve seat 9 closed.

The operation of the pressure control valve (which is called a relief valve) constructed as above will be described.

If high-pressure hydraulic fluid is supplied from the hydraulic pump P to the inlet port 1, the hydraulic fluid moves to the pressure chamber 8 after passing through an internal flow path of the piston 6 of the main poppet 4 that is seated on the sleeve 3. At this time, the pilot poppet 10 is maintained in a seated state on valve seat 9 by an elastic force of the pilot poppet spring 11 that supports the pilot poppet 10 (the state illustrated in Fig. 2).

Since the cross-sectional area of the left sliding portion is larger than the cross-sectional area of the portion seated on the sleeve 3 in the main poppet 4 as described above and the main poppet 4 is supported by the elastic force of the main poppet spring 7, the main poppet 4 is pressed to the left and is seated on the sleeve 3. Through this, the low-pressure path 2 is maintained in a closed state with respect to the inlet port 1.

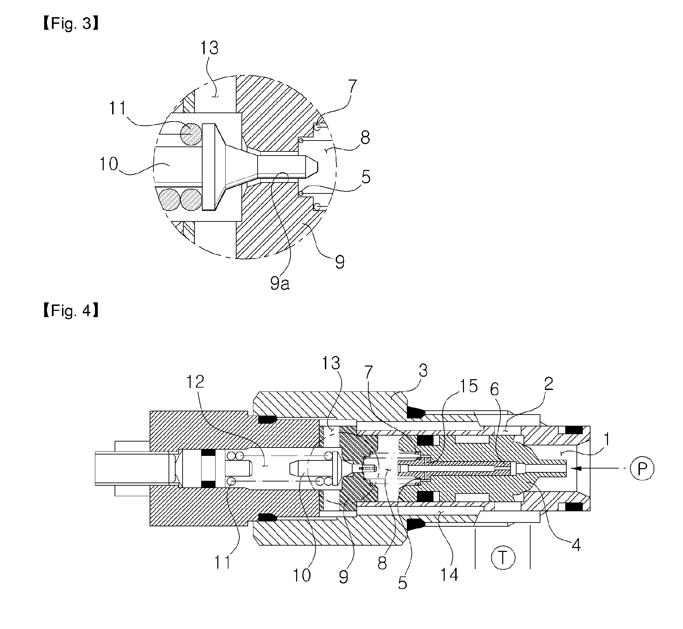

At this time, if the pressure of the hydraulic fluid that is supplied to the pressure chamber 8 is gradually increased and reaches a predetermined pressure of the pilot poppet spring 11, the pilot poppet 10 moves to the left to open the internal flow path 9a of the valve seat 9 (the state illustrated in Fig. 3).

In this case, the pressure of the pressure chamber 8 passes through the internal flow path 9a of the open valve seat 9, and returns to the hydraulic tank T through a back chamber 12, and low-pressure path 13 is formed on the valve seat 9, and a low-pressure path 14 is formed on the sleeve 3 in order. At this time, the pressure of the pressure chamber 8 is gradually lowered since the internal flow path 9a of the valve seat 9 is open due to the shifting of the pilot poppet 10.

Accordingly, since the pressure of the pressure chamber 8 becomes lower than the pressure of the inlet port 1, the piston 6 moves to the left to be in contact with an end portion of the pilot poppet 10 due to the difference in pressure acting on left and right pressure-receiving portions.

By contrast, in the main poppet 4, the cross-sectional area of the left sliding portion becomes relatively larger than the cross-sectional area of the portion seated on the sleeve 3, and thus the sleeve 3 is maintained in the seated state even if the difference in pressure acting on the left and right pressure-receiving portions occurs.

If the piston 6 comes in contact with the pilot poppet 10 and the internal flow path of the piston 6 is clogged, the hydraulic fluid that is supplied to the internal flow path of the piston 6 moves to the pressure chamber 8 through an orifice 15 of the piston 6 only. Due to this, the flow rate of the hydraulic fluid that passes through the internal flow path of the piston 6 is abruptly decreased, and the difference in pressure between the hydraulic fluid on the side of the inlet port 1 and the hydraulic fluid on the side of the pressure chamber 8 becomes greater.

That is, the difference in pressure acting on the left and right pressure-receiving portions becomes larger than the difference in cross-sectional area between the left and right light pressure-receiving portions of the main poppet 4, and due to this pressure difference, the main poppet 4 moves to the left.

Accordingly, as main poppet 4 is lifted from the sleeve 3, the hydraulic fluid on the side of the inlet port 1 is relieved into the hydraulic tank T through the low-pressure path 2 of the sleeve 3, and thus the pressure of the hydraulic system can be constantly maintained.

If the pilot poppet 10 moves to the left in the procedure in which the pilot poppet 10 is lifted from the valve seat 9 and the high-pressure hydraulic fluid of the pressure chamber 8 is relieved to the hydraulic tank T as shown in Fig. 3, the pilot poppet 10 is maintained in a floating state in the air since there is no structure that guides and supports the movement of the pilot poppet 10 in the back chamber 12.

Accordingly, the high-pressure hydraulic fluid in the pressure chamber 8 passes through the internal flow path 9a of the valve seat 9 at high speed to collide with the pilot poppet 10. Due to this, the pilot poppet 10 is shaken to generate bubbles and to lose its balance. Accordingly, the pressure of the hydraulic fluid becomes unstable, and noise and vibration occur to cause an unstable hydraulic system.

Further, the workability of a worker is degraded, and replacement of the pressure control valve is required to causing the manufacturing cost to be increased.

### DISCLOSURE

### TECHNICAL PROBLEM

Therefore, the present invention has been made to solve the above-mentioned problems occurring in the related art, and one embodiment of the present invention is related to a pressure control valve, in which a pilot poppet continues to slide on a valve seat through the movement of the pilot poppet during a relief operation, and thus the relief operation becomes stable and the pressure control valve has durability.

### TECHNICAL SOLUTION

In accordance with an aspect of the present invention, there is provided a pressure control valve, which includes a sleeve having an inlet port formed thereon to receive an inflow of hydraulic fluid from a hydraulic pump and a low-pressure path formed thereon to communicate with a hydraulic tank; a main poppet detachably mounted on the sleeve to open and close the low-pressure path with respect to the inlet port; a piston slidably coupled to the main poppet to be elastically supported by a piston spring; a main poppet spring elastically biasing the main poppet in an initial state by pressing the main poppet to ensure the low-pressure path is closed with respect to the inlet port; a valve seat installed in the sleeve to face the main poppet so as to form a pressure chamber; a pilot poppet having an orifice flow path formed thereon so as to control pressure in the pressure chamber while maintaining its sliding state against the valve seat when pressure that exceeds a predetermined pressure is generated in the pressure chamber. The pilot poppet is then lifted from the valve seat to open an internal flow path of the valve seat; and a pilot poppet spring elastically biasing the pilot poppet in an initial state by pressing the pilot poppet to maintain the internal flow path of the valve seat is closed.

In a preferred embodiment, the orifice flow path includes a path formed in a center of the pilot poppet that slides against the valve seat in an axis direction; and at least one orifice is formed on a sliding portion of the pilot poppet to communication with the path.

### ADVANTAGEOUS EFFECT

As described above, according to a pressure control valve related to to an embodiment of the present invention, the following advantages can be obtained.

Since the minimum amount of hydraulic fluid is relieved to the hydraulic tank through the orifice flow path formed in the pilot poppet of the relief valve, the leakage of hydraulic fluid and impact occurring due to the high pressure and large capacity of the hydraulic fluid can be attenuated, and thus the noise occurrence is minimized and the durability of relief valve is secured.

Further, since the pilot poppet is maintained in a sliding state on the valve seat during the relief operation, the pressure of the hydraulic system can be stably maintained. Additionally, the working efficiency is improved through creation of the optimum working atmosphere, and manufacturing cost increases due to the replacement of the pressure control valve can be prevented.

### BRIEF DESCRIPTION OF THE DRAWINGS

The above objects, other features and advantages of the present invention will become more apparent by describing the preferred embodiments thereof, with reference to the accompanying drawings, in which:
Fig. 1 is a cross-section view of a pressure control valve in the related art;
Fig. 2 is a view illustrating a state where a pilot poppet illustrated in Fig. 1 is seated;
Fig. 3 is a view illustrating a state where a pilot poppet illustrated in Fig. 1 is lifted;
Fig. 4 is a cross-sectional view of a pressure control valve according to an embodiment of the present invention;
Fig. 5 is a view illustrating a state where a pilot poppet illustrated in Fig. 4 is seated; and
Fig. 6 is a view illustrating a state where a pilot poppet illustrated in Fig. 4 is lifted.

### * Description of Reference Numerals in the Drawing

1: inlet port
2: low-pressure path
3: sleeve
4: main poppet
5: piston spring
6: piston
7: main poppet spring
8: pressure chamber
9: valve seat
10: pilot poppet
11: pilot poppet spring
12: back chamber
13: low-pressure path
14: low-pressure path
15: orifice
20: orifice flow path
21: sliding portion
22: path
23: orifice

### BEST MODE

Now, preferred embodiments of the present invention will be described in detail with reference to the accompanying drawings. The matters defined in the description, such as the detailed construction and elements, are nothing but specific details provided to assist those of ordinary skill in the art in a comprehensive understanding of the invention, and the present invention is not limited to the embodiments disclosed hereinafter.

As illustrated in Figs. 4 to 6, a pressure control valve according to an embodiment of the present invention includes a sleeve 3 having an inlet port 1 formed thereon to receive an inflow of hydraulic fluid from a hydraulic pump P and a low-pressure path 2 formed thereon to communicate with a hydraulic tank T; a main poppet 4 detachably mounted on sleeve 3 to open and close the low-pressure path 2 with respect to the inlet port 1; a piston 6 slidably coupled to the main poppet 4 to be elastically supported by a piston spring 5; a main poppet spring 7 elastically biasing the main poppet 4 in an initial state by pressing the main poppet 4 to maintain the low-pressure path 2 closed with respect to the inlet port 1; a valve seat 9 installed in the sleeve 3 to face the main poppet 4 so as to form a pressure chamber 8; a pilot poppet 10 having an orifice flow path 20 formed thereon so as to control pressure in the pressure chamber 8 while maintaining a sliding state against the valve seat 9 when pressure that exceeds a predetermined pressure is generated in the pressure chamber 8 and thus the pilot poppet 10 is lifted from the valve seat 9 to open an internal flow path of the valve seat 9; and a pilot poppet spring 11 elastically biasing the pilot poppet 10 in an initial state by pressing the pilot poppet 10 to maintain the internal flow path of the valve seat 9 closed.

More preferably, the orifice flow path 20 includes a path 22 formed in the center of the pilot poppet 10 that slides against the valve seat 9 in an axis direction; and at least one orifice 23 (which is penetratingly formed at right angles to communicate with the path 22) formed on a sliding portion 21 of the pilot poppet 10 to communication with the path 22.

Hereinafter, a usage example of the pressure control valve according to an embodiment of the present invention will be described in detail with reference to the accompanying drawings.

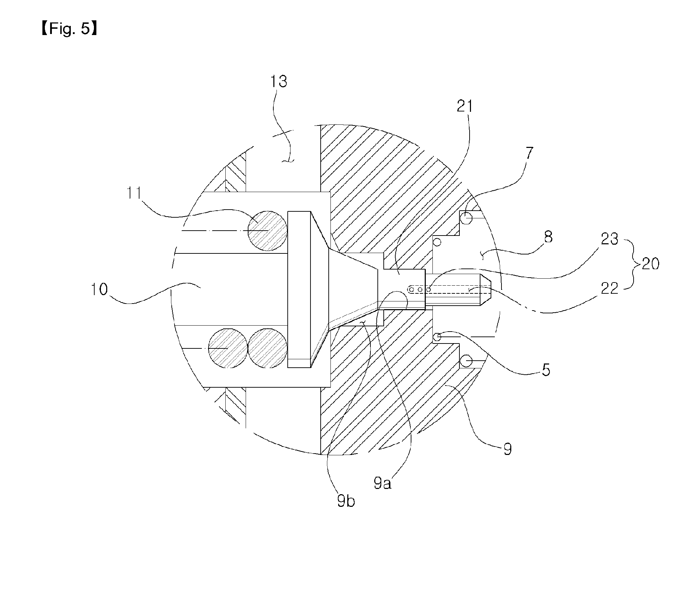

As shown in Figs. 4 to 6, if high-pressure hydraulic fluid is supplied from the hydraulic pump P to the inlet port 1, the hydraulic fluid moves to the pressure chamber 8 after passing through an internal flow path of the piston 6 of the main poppet 4 that is seated on the sleeve 3. At this time, the pilot poppet 10 is maintained in a seated state on the valve seat 9 by an elastic force of the pilot poppet spring 11 that supports the pilot poppet 10 (the state illustrated in Fig. 5).

Since the cross-sectional area of a left sliding portion is larger than the cross-sectional area of a portion seated on the sleeve 3 in the main poppet 4 as described above and the main poppet 4 is supported by the elastic force of the main poppet spring 7, the main poppet 4 is pressed to the left and is maintained in a seated state on the sleeve 3. Through this, the low-pressure path 2 is maintained in a closed state with respect to the inlet port 1 (the state illustrated in Fig. 4).

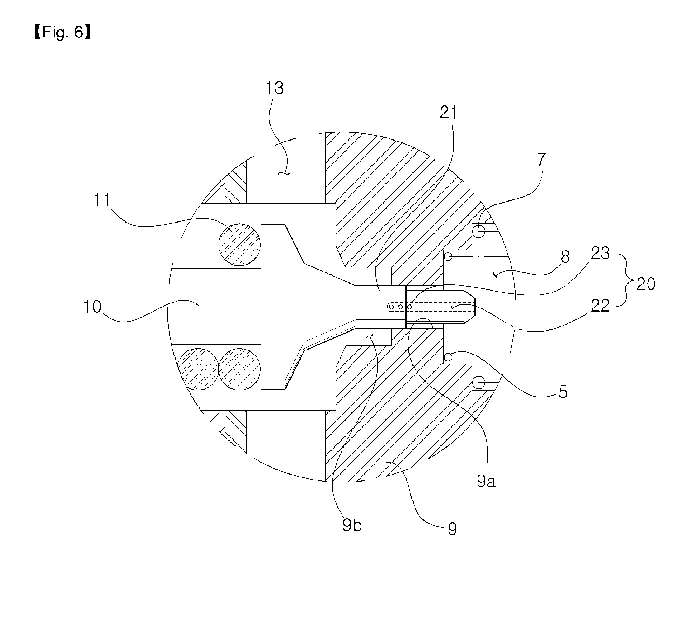

At this time, if the pressure of the hydraulic fluid that is supplied to the pressure chamber 8 is gradually increased and reaches predetermined pressure of the pilot poppet spring 11, the pilot poppet 10 moves to the left. At this time, sliding portion 21 of the pilot poppet 10 is maintained in a sliding state by the internal flow path 9a (the state illustrated in Fig. 6).

Accordingly, the pressure of the pressure chamber 8 passes through the path 22 formed on the sliding portion 21 of the pilot poppet 10 and the orifice 23 is formed to communicate with the path 22, and moves to a back chamber 12 through a pocket 9b of the valve seat 9. The hydraulic fluid, having moved to the back chamber 12, returns to the hydraulic tank T through a low-pressure path 13 formed on the valve seat 9 and a low-pressure path 14 is formed on the sleeve 3. At this time, the pressure of the pressure chamber 8 is gradually lowered since the pressure is connected to the hydraulic tank T through the orifice flow path 20 that is open when the pilot poppet 10 is shifted.

Accordingly, since the pressure of the pressure chamber 8 becomes lower than the pressure of inlet port 1, the piston 6 moves to the left to be in contact with an end portion of the pilot poppet 10 due to a difference in pressure acting on the left and right pressure-receiving portions.

By contrast, in the main poppet 4, the cross-sectional area of the left sliding portion becomes relatively larger than the cross-sectional area of the portion seated on the sleeve 3, and thus the sleeve 3 is maintained in the seated state even if the difference in pressure acting on the left and right pressure-receiving portions occurs.

If the piston 6 comes in contact with the end portion of the pilot poppet 10 and the internal flow path of the piston 6 is clogged, the hydraulic fluid in the piston 6 moves to the pressure chamber 8 through the path 22 formed on sliding portion 21 and the orifice 23 (for example, one of three orifices is open) that communicates with the path 22 and through the internal flow path 9a.

Due to this, the flow rate of the hydraulic fluid moving from the inlet port 1 to the pressure chamber 8 is abruptly decreased, and the hydraulic fluid in the pressure chamber 8 is connected to the pocket 9b through the path 22 formed on the sliding portion 21 and the orifice 23 (for example, one of three orifices is open). The hydraulic fluid, having moved to the back chamber 12, returns to the hydraulic tank T through the low-pressure path 13 formed on the valve seat 9 and the low-pressure path 14 formed on the sleeve 3. Due to this, the pressure in the pressure chamber 8 is abruptly decreased, and the difference in pressure between the hydraulic fluid on the side of the inlet port 1 and the hydraulic fluid on the side of the pressure chamber 8 becomes greater.

That is, since the difference in pressure acting on the left and right pressure-receiving portions becomes larger than the pressure balancing due to the difference in cross-sectional area between the left and right light pressure-receiving portions of the main poppet 4, the main poppet 4 moves to the left due to the pressure difference.

Accordingly, since the main poppet 4 is lifted from the sleeve 3, the hydraulic fluid on the side of the inlet port 1 is relieved to the hydraulic tank T through low-pressure path 2 of the sleeve 3, the pressure of the hydraulic system can be constantly maintained.

At this time, if the pilot poppet 10 moves to the left in the procedure in which the pilot poppet 10 is lifted from the valve seat 9 and the high-pressure hydraulic fluid of the pressure chamber 8 is relieved to the hydraulic tank T as shown in Fig. 6, the sliding portion 21 of the pilot poppet 10 does not completely secede from the internal flow path 9a, but is maintained in a continuously sliding state.

Accordingly, since the pilot poppet 10, which is lifted from the valve seat 9 during the relief operation, slides in the internal flow path 9a of the valve seat 9, no shaking occurs. Further, as a path for moving the hydraulic fluid from the pressure chamber 8 to the hydraulic tank T during the relief operation, the path 22 is formed on the pilot poppet 10 and three separate orifice 23s are formed on the sliding portion 21 to communicate with the path 22.

Through this, since the flow rate of the hydraulic fluid that returns from the pressure chamber 8 to the hydraulic tank T is decreased, the occurrence of vibration and noise can be decreased, and stable pressure can be formed in the hydraulic system.

According to the pressure control valve as described above according to an embodiment of the present invention, when the pilot poppet is lifted from the valve seat during the relief operation, the pilot poppet continues to slide on the valve seat, and thus the relief operation is stably performed. Further, since the minimum amount of hydraulic fluid is relieved by the orifice flow path formed in the pilot poppet, the occurrence of vibration and noise due to the collision of the pilot poppet with the high-pressure hydraulic fluid can be prevented, and the durability of the control valve can be secured.

### INDUSTRIAL APPLICABILITY

As apparent from the above description, according to an embodiment of the present invention, since the minimum amount of hydraulic fluid is relieved to the hydraulic tank during the relief operation through the orifice flow path formed in the pilot poppet of the relief valve, the leakage of hydraulic fluid and impact occurring due to the high pressure and large capacity of the hydraulic fluid can be attenuated, and thus the occurrence of vibration and noise is minimized and the durability of the relief valve is secured.

Further, since the pilot poppet is maintained in a sliding state on the valve seat during the relief operation, the pressure of the hydraulic system can be stably maintained. Further, the working efficiency is improved through the creation of an optimum working atmosphere, and an increase in manufacturing costs due to the regular replacement of pressure control valves can be prevented.

## Claims

1. A pressure control valve comprising:
a sleeve having an inlet port formed thereon to receive an inflow of hydraulic fluid from a hydraulic pump and a low-pressure path formed thereon to communicate with a hydraulic tank;
a main poppet detachably mounted on the sleeve to open and close the low-pressure path with respect to the inlet port;
a piston slidably coupled to the main poppet to be elastically supported by a piston spring;
a main poppet spring elastically biasing the main poppet in an initial state by pressing the main poppet to maintain the low-pressure path closed with respect to the inlet port;
a valve seat installed in the sleeve to face the main poppet so as to form a pressure chamber;
a pilot poppet having an orifice flow path formed thereon so as to control pressure in the pressure chamber while maintaining a sliding state against the valve seat when pressure that exceeds a predetermined pressure is generated in the pressure chamber and thus the pilot poppet is lifted from the valve seat to open an internal flow path of the valve seat; and
a pilot poppet spring elastically biasing the pilot poppet in an initial state by pressing the pilot poppet to maintain the internal flow path of the valve seat closed.

2. The pressure control valve according to claim 1, wherein the orifice flow path comprises:
a path formed in a center of the pilot poppet that slides against the valve seat in an axis direction; and
at least one orifice formed on a sliding portion of the pilot poppet to communicate with the path.
